# EUROPÄISCHE PATENTSCHRIFT

(11) **EP 2 408 655 B1**
(45) Veröffentlichungstag und Bekanntmachung des Hinweises auf die Patenterteilung: **02.03.2016**
(21) Anmeldenummer: 10709519.2
(22) Anmeldetag: 18.03.2010
(51) Int. Cl.: B29L 31/00, B64F 5/00, B29K 307/00, B29C 65/00, B29C 65/54, B29C 65/48, B05C 5/02, B05C 13/02, B05C 11/10, B29C 65/78, B29K 105/06, B29L 31/30

(54) **VERFAHREN ZUR TOLERANZANGEPASSTEN KLEBSTOFFAPPLIKATION IM FAHRZEUGBAU**
METHOD FOR APPLYING ADHESIVE ACCORDING TO TOLERANCE IN VEHICLE CONSTRUCTION
PROCÉDÉ D'APPLICATION DE SUBSTANCE ADHÉSIVE EN FONCTION DE TOLÉRANCES DANS LE DOMAINE DE LA CONSTRUCTION DE VÉHICULES

(30) Priorität: 19.03.2009 DE 102009013541; 08.03.2010 DE 102010010685
(43) Veröffentlichungstag der Anmeldung: 25.01.2012
(73) Patentinhaber: Airbus Operations GmbH, 21129 Hamburg (DE)
(72) Erfinder: NIERMANN, Dirk, 28865 Lilienthal (DE); FRAUEN, Holger, 21129 Hamburg (DE)
(74) Vertreter: Isarpatent
(86) Internationale Anmeldenummer: PCT/EP2010/053512
(87) Internationale Veröffentlichungsnummer: WO 2010/106123

(56) Entgegenhaltungen:
- EP-A2- 1 004 361
- WO-A1-2007/034197
- WO-A1-2010/014333
- WO-A2-2004/076769
- DE-A1-102007 061 429
- US-A1- 2004 236 454

## Beschreibung

Die Erfindung betrifft ein Verfahren zur toleranzangepassten Klebstoffapplikation im Fahrzeugbau, insbesondere im Bau von Flugzeugrümpfen für Großflugzeuge, gemäß dem Oberbegriff des Anspruchs 1 sowie eine entsprechende Vorrichtung gemäß dem Oberbegriff des Anspruchs 6.

Moderne Leichtbauweisen haben den Fahrzeugbau, ob dies nun Schiffe, Flugzeuge, Automobile oder Schienenfahrzeuge sind, in der jüngeren Vergangenheit stark verändert. So führt die Verwendung geeigneter Materialien zu Verbesserungen hinsichtlich Gewicht, Sicherheit und Komfort, wobei gleichzeitig Kosteneinsparungen möglich wurden. Neben der Verwendung geeigneter Materialien wurde dieser Fortschritt durch den intelligenten Einsatz moderner Klebstofftechnik erzielt, wobei die Klebstofftechnik sich mit den üblichen Fügetechniken wie Nieten, Schrauben oder Punktschweißen kombinieren lässt.

Mittlerweile hat die Klebstofftechnik auch beim Flugzeugbau Einzug gehalten. So wird das Rumpfwerk von Großflugzeugen in einer Schalenbauweise im wesentlichen manuell gefügt. In entsprechend großen Vorrichtungen wird der Rumpf eines Flugzeugs in teilmechanisierten und zum Teil in manuellen Montageschritten mit Stringern, Spanten, Passagier- und Ladeflur (Passenger- und Cargo-Floor), Tür- und Fracht-Türrahmen sowie Fensterrahmen ausgerüstet, bevor die Außenhaut geschlossen wird.

Strukturrelevante Verbindungen werden durch Nieten oder durch eine Kombination aus Nieten und Kleben gefügt, was auch als Niet-Kleben bezeichnet wird. Dabei werden sowohl Paneel als auch Rumpfsegmente untereinander sowie die eingefügten Komponenten durch Nieten verbunden, wobei vor dem Fügen flüssige Shim-Materialen appliziert werden, die den beim Nieten verbleibenden, geringfügig ungleichmäßigen Spalt zwischen den Fügeteilen ausfüllen. Bei den Shim-Materialien handelt es sich in der Regel um 2-komponentige Epoxidharze, die ein Spaltfüllungsvermögen von ca. 2 - 3 mm und eine Aushärtzeit von 8 h bei Raumtemperatur besitzen.

Größere Spalte werden mittels Feststoff-Shims aus Faserverbundmaterial zeitaufwendig manuell ausgeglichen. Es kann auch eine Kombination aus flüssigen und festen Schim-Materialien eingesetzt werden. Insgesamt erfolgt die Verarbeitung der Shim-Materialien im wesentlichen manuell und erfordert einen hohen Zeitaufwand, insbesondere da die Fügepartner zur Bestimmung der Spaltmaße provisorisch gefügt werden und danach die Fügepartner wieder auseinander gefahren werden müssen.

Ein Beispiel der Konstruktion von Großflugzeugen in Schalenbauweise kann der DE 10 2007 061 429 A1 entnommen werden, aus der eine Rumpfstruktur eines Flugzeugs bekannt ist. Dabei weist die Rumpfstruktur eine Außenhaut, mit der Außenhaut verbundene Strukturbauteile wie Stringer und Spanten sowie eine Innenverkleidung auf. Die Strukturbauteile werden mit der Außenhaut verklebt, vernietet und/oder verschweißt und die Innenverkleidung bildet mit der Außenhaut und ihren Strukturbauteilen eine tragende Verbindung. Dabei kann die Innenverkleidung ebenfalls mittels einer Klebeverbindung mit den Strukturbauteilen und/oder der Außenhaut verbunden sein.

Die bislang im Luftfahrtbereich eingesetzten Klebsysteme und Klebtechniken lassen ein schnelles automatisiertes klebtechnisches Fügen des Rumpfes sowie eingerüsteter Komponenten und einen Ausgleich von Toleranzen über 2 mm ohne zusätzlichen Feststoff-Shim nicht zu.

Die US 2004/0236454 A1 beschreibt ein Verfahren zum Verbinden eines Flugzeughautabschnitts mit einem Längsträger durch eine Klebeverbindung, wobei eine Oberflächentopographie, die nicht eben ist, vor dem Fügen geglättet wird. Hierzu werden die Oberflächen, die verbunden werden sollen, optisch abgetastet und die topografischen Informationen für jeden Oberflächenbereich erfasst, der für die Bereitstellung einer ebenen Verbindungsfläche geglättet werden muss. Die topographische Informationen werden dann verarbeitet, um die Konfiguration und das Volumen eines Füllmaterials zu bestimmen, um damit eine ebene Oberfläche oder zumindest eine glatte Oberfläche ohne Hügel und Täler zu erzeugen. Eine Dosiereinrichtung führt das genaue Volumen des zum Glätten der Oberflächentopographie benötigten Füllmaterials zu. Wenn das Glätten abgeschlossen ist, sind die beiden Komponenten bereit zum Verbinden, zum Beispiel durch die Anwendung von Druck und Wärme auf das Füllmaterial.
Der Erfindung liegt daher die Aufgabe zugrunde, ein Verfahren und eine entsprechende Vorrichtung zur Klebstoffapplikation in der Montage von Großstrukturen im Fahrzeugbau, insbesondere beim Flugzeugbau, zu schaffen, womit eine manuelle Fertigung möglichst vermeidbar ist, so dass eine größere Produktivität erreicht wird.

Diese Aufgabe wird durch ein Verfahren mit den Merkmalen des Anspruchs 1 sowie durch eine Vorrichtung mit den Merkmalen des Anspruchs 6 gelöst. Bevorzugte Ausführungsformen der Erfindung sind Gegenstand der Unteransprüche.

Das erfindungsgemäße Verfahren zur Klebstoffapplikation im Fahrzeugbau beim Fügen von toleranzbehafteten Fügepartnern weist die Verfahrensschritte des Anspruchs 1 auf.

Beim Flugzeugbau sind die Fügepartner wie Rumpfelemente bzw. Rumpfsegmente sowie die einzurüstenden Komponenten toleranzbehaftet. Durch moderne Einmeßverfahren lassen sich die Geometrien der Fügepartner ermitteln und aus den ermittelten digitalen Daten die Spaltmaße für klebtechnische Fügungen mit ausreichende Genauigkeit bestimmen. Die Applizierung des Klebstoffs in den Fügespalt nach oder während des Fügens der Fügepartner ermöglicht ein automatisiertes Fügen der Fügepartner. Da ferner ein provisorisches Fügen der Fügepartner zur Bestimmung der Spaltmaße unterbleibt, ist eine hohe Fertigungskadenz möglich.

Erfindungsgemäß wird anhand der Fügespaltmaße die Menge des zu applizierenden Klebstoffs bestimmt. Dadurch wird sichergestellt, dass die Klebverbindung den gewünschten Stabilitätsbedingungen genügt und ein ökonomischer Klebstoffverbrauch erzielt wird.

Bei einer Ausführung erfolgt die Applizierung des Klebstoffs in den Fügespalt, wenn die endgültige Fügeposition erreicht ist. Der Klebstoff verteilt sich und füllt so einen Abschnitt der Fuge oder die komplette Fuge aus. Das dafür notwendige Fließen des Klebstoffs kann durch seine Formulierung, Schwerkraft, Fliehkräfte, magnetische und/oder elektrische Felder, Unterdruck in der Fuge, Temperaturführung der Fügepartner und/oder des Klebstoffs oder einer Kombination der genannten Parameter erreicht werden. Damit wird erreicht, dass der benötigte Klebstoff in den fertigen Fügespalt appliziert wird und durch weitere Maßnahmen beispielsweise das unmittelbare Aushärten des Klebstoff initiiert werden kann.

Es kann jedoch auch die Applizierung des Klebstoffs in den Fügespalt erfolgen oder beginnen, wenn der Abstand der Fügepartner zur endgültigen Fügeposition kleiner als ein vorgegebenes Maß ist. Damit ist es möglich, die Fügepartner in eine vorläufige Fügeposition zu fahren, den Klebstoff zu applizieren und dann die Fügepartner in die endgültige Fügeposition zu bringen. Diese Variante kann sinnvoll sein, wenn die Erreichbarkeit des Fügespaltes in der endgültigen Position erschwert ist, so dass der Klebstoff in einer vorläufigen Position eingebracht werden muss.

Erfindungsgemäß ist es möglich, die Applikation des Klebstoffs in einer vorläufigen Spaltposition zu beginnen und während der Klebstoffapplikation die Fügepartner in die endgültige Fügeposition zu bringen. Diese Variante ist mit einer Zeitersparnis verbunden und die Wirtschaftlichkeit des Verfahrens wird erhöht.

Auch hierbei kann das dafür notwendige Fließen des Klebstoffs durch seine Formulierung, Schwerkraft, Fliehkräfte, magnetische und/oder elektrische Felder, Unterdruck in der Fuge, Temperaturführung der Fügepartner und/oder des Klebstoffs oder einer Kombination der genannten Parameter erreicht werden.

Vorzugsweise wird der Klebstoff seitlich in den Klebespalt und/oder durch Applikationsöffnungen in einem oder beiden Fügepartner in den Fügespalt appliziert.

Weiter bevorzugt kann der Fügespalt seitliche oder flächenrandständige Begrenzungselemente aufweisen, um ein Austreten des in den Fügespalt applizierten Klebstoffs zu verhindern. Dadurch wird ein unkontrollierter Klebstoffaustritt aus dem Klebspalt vermieden werden. Diese Begrenzungselemente können nach der Aushärtung an der Klebung verbleiben oder nach Erreichen einer ausreichenden mechanischen Stabilität der Klebung entfernt werden. Für den Fall, dass die Elemente verbleiben, können sie auch aus einem zweiten Klebstoff bestehen. Dieser zweite Klebstoff kann zu einem Zeitpunkt vor, während oder nach dem Einbringen der Fügepartner in die endgültige Fügeposition auf eine oder beide Fügeteiloberflächen appliziert werden. Dieser zweite Klebstoff kann separat oder mit dem in den Fügespalt applizierten Klebstoff zusammen ausgehärtet werden. Für den Fall, dass die Begrenzungselemente entfernt werden, können sie eine haftungsabweisende Oberfläche aufweisen, die beispielsweise durch das verwendete Material oder eine auflaminierte Folie erzielt werden kann.

Vorzugsweise werden vor dem Zusammenfügen der Fügepartner die Fügeflächen der Fügespalten bzw. Fugen einer automatisierten Vorbehandlung zur Optimierung der klebtechnischen Qualität unterzogen und deren klebtechnische Qualität bestimmt. Damit wird eine optimales Klebeergebnis erzielt.

Insbesondere werden beim Flugzeugbau die Fügepartner durch Rumpfsegmente und strukturell relevante Komponenten wie Spanten, Stringer etc. zum Erstellen einer Rumpfstruktur gebildet.

Die erfindungsgemäße Vorrichtung zur Durchführung des oben erläuterten Verfahrens umfasst:
- einen Bauteilträger mit Bauteilaufnahme zur Aufnahme eines ersten Fügepartners,
- einen Zentralträger zur Aufnahme von mindestens einem Integrationswerkzeug,
- ein Integrationswerkzeug zur Aufnahme und zum Einbringen der in den ersten Fügepartner einzubringenden weiteren Fügepartner,
- ein Meßsystem zum Ermitteln der Geometriedaten der Fügepartner und zum Berechnen der Fügespalte,
- mindestens ein Applikationswerkzeug zum Applizieren des Klebstoffs, und
- ein Steuersystem zum Steuern der Vorrichtung.

Vorzugsweise weist die Vorrichtung weitere Werkzeuge zur Oberflächenbehandlung und/oder zum Oberflächenmonitoring und/oder zum Klebstoffaushärten auf. Dabei können einzelne Werkzeuge zur Bearbeitung der einzurüstenden Komponenten dienen, währendweitere Werkzeuge zur Aufnahme auf den Zentralträger ausgelegt sind, um den ersten auf dem Bauteilträger angeordneten Fügepartner bearbeiten und/oder ausmessen zu können. Diese Werkzeuge können als Roboter ausgelegt sein, die bedarfsabhängig über entsprechende räumliche Freiheitsgrade verfügen.

Eine bevorzugte Ausführungsform der Erfindung wird nachfolgend anhand der Zeichnungen beschrieben. Dabei zeigt
- Fig. 1: eine erste perspektivische Darstellung der erfindungsgemäßen Vorrichtung mit einem über einen Zentralträger geführten Werkzeug zum Einrüsten von Spanten,
- Fig. 2: eine zweite perspektivische Darstellung der Vorrichtung mit einem weiteren Werkzeug, und
- Fig. 3: eine Darstellung eines Details der Vorrichtung nach Fig. 1.

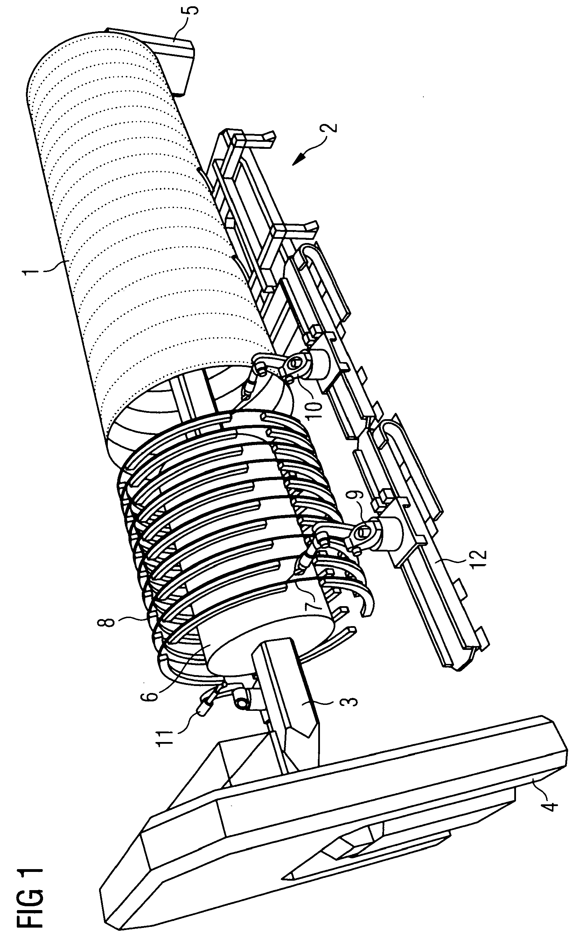

Fig. 1 zeigt eine schematische Darstellung der erfindungsgemäßen Vorrichtung für die Strukturkomplettierung von Rumpfsegmenten basierend auf dem Zentralträgerprinzip, wobei die Vorrichtung Techniken und Systeme für eine weitgehend parallelisierte Einrüstung von Spanten, Passagier- und Cargo-Fluren, Tür- und Frachttürrahmen sowie Fensterrahmen in das eingerüstete Rumpfsegment bereithält. Ein Rumpfsegment 1 ist auf einem fahrbaren Bauteileträger 2 gelagert, wobei der Bauteileträger 2 eine automatisierte Bauteileaufnahme und Systeme zur Form- und Lagekorrektur (nicht dargestellt) aufweist. Im Innern des Rumpfsegments 1 erstreckt sich im eingerüsteten Zustand des Rumpfsegments 1 ein Zentralträger 3, der beidseitig von festen und versenkbaren Auflagern 4, 5 gestützt wird.

Auf dem von den festen und versenkbaren Auflagern 4, 5 gestützten Zentralträger 3, der beispielsweise eine Länge von ca. 22 m haben kann, können je nach Einrüstvorgang verschiedene Integrationswerkzeuge 6 geführt werden. Zum Einbringen des in Fig. 1 dargestellten tonnenförmigen Rumpfsegments 1 in die Vorrichtung kann der Zentralträger 3 teleskopartig eingefahren werden. Das Rumpfsegment 1 wird auf dem fahrbaren Bauteilträger 2 liegend in die Vorrichtung eingebracht. Der Bauteilträger 2 besitzt eine Funktionalität zur Lagekorrektur des Rumpfsegments 1 sowie Spannvorrichtungen, mit denen eine Formfixierung und ggf. eine Formkorrektur des Rumpfsegments 1 vorgenommen werden kann. Nach dem Einbringen des Rumpfsegments 1 kann der Zentralträger 3 wieder zum hinteren Auflager 5 ausgefahren werden. Dann wird das jeweils benötigte und außerhalb der Anlage bereits vorgerüstete Integrationswerkzeug 6 aufgesetzt, welches im Beispiel mit einzurüstenden Spanten 7 bestückt ist.

Um eine hochgradige Parallelisierung von Montageschritten zu erreichen, sollen möglichst viele der oben genannten Komponenten pro Prozessschritt und pro Werkzeug gleichzeitig eingerüstet werden.

Über den Zentralträger 3 als Führung wird das mit den einzubringenden Komponenten aufgerüstete Integrationswerkzeug 6 in das Rumpfsegment1 eingefahren und referenziert sich optisch im Raum, so dass später die Spantgurtoberfläche 8 den Referenz-Nullpunkt darstellt.

Danach werden die einzurüstenden Komponenten, hier die Spanten 7, durch Klapp-, Setz- oder radial gerichtete Spreizprozesse des Integrationswerkzeugs 6 simultan in ihre exakten Fügepositionen gebracht. Eine mögliche Kombination liegt z.B. in dem gleichzeitigen Einbringen von Spanten 7 und Fußböden (nicht dargestellt).

Ferner weist die Vorrichtung modulare Werkzeuge 9,10, 11 sogenannte Endeffektoren, auf, die beweglich auf einem Schienensystem 12 angeordnet sind, und die zur Oberflächenbehandlung, Oberflächenmonitoring, Klebstoffauftrag und Aushärten des Klebstoffs dienen und für diese Aufgaben mit den entsprechenden Werkzeugen bestückt werden könne, wobei die entsprechende Bestückung automatisch erfolgt.

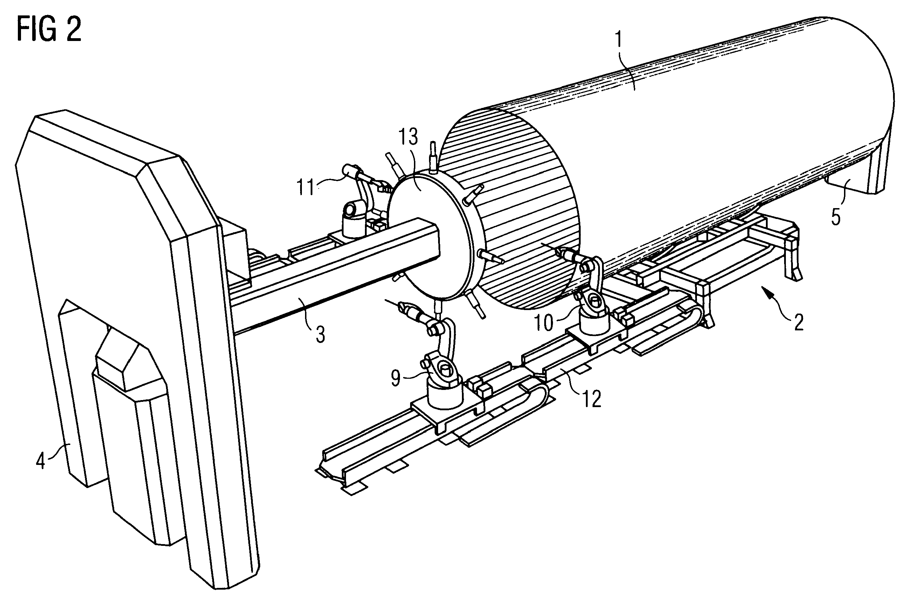

Fig. 2 zeigt die Vorrichtung der Fig. 1, wobei auf dem Zentralträger 3 ein modulares Werkzeug 13 angeordnet ist, welches dazu dient die Fügeflächen im Rumpfsegment 1 zur Erzielung eines optimalen Klebergebnisses automatisch zu behandeln. Weiterhin dient das modulare Werkzeug 13 dazu, die vorbehandelten Fügeflächen hinsichtlich ihrer klebtechnischen Qualität zu beurteilen. Zur Vorbehandlung der Fügeflächen und deren Beurteilung wird das modulare Werkzeug 13 in das Rumpfsegment 1 eingefahren

Wie bereits erläutert, basiert der fügetechnische Ansatz auf dem Einsatz der Klebtechnik, ohne dass zusätzliche Nieten zum Fixieren verwendet werden. Sollten Nieten an ausgesuchten Stellen notwendig sein, so werden diese später auf einer anderen Anlage eingebracht. Die Funktion des Klebens in der Montage ist damit die schnelle Fixierung der eingebrachten Komponenten sowie der Toleranzausgleich zur inneren Oberfläche des Rumpfes, die je nach Herstellungstechnik unterschiedlich stark toleranzbehaftet sein kann.

Neben dem Erfüllen einer Ausgleichs- und Abdicht-Funktion gehören zu den wesentlichen Forderungen an einen CFK-Strukturklebstoff für Luftfahrtanwendungen eine gute Verarbeitbarkeit, die vor allem durch lange offene Zeiten und montagegerechte Rheologie definiert wird, eine schnelle Aushärtung sowie eine hohe Druckbeständigkeit, um in der ausgehärteten Fuge Lockerungen durch Fließprozesse zu vermeiden.

Zunächst werden daher die Fügeflächen im Rumpf, hier durch das Werkzeug 13, und auf den Komponenten wie den beispielhaften Spanten automatisch vorbehandelt und anschließend mit einem automatisierten Monitoring-Verfahren hinsichtlich ihrer klebtechnischen Qualität geprüft. Dadurch wird eine deutliche Verringerung der benötigten Vorbehandlungszeit bei wesentlich verbesserter Reproduzierbarkeit im Vergleich zur manuellen Durchführung erreicht.

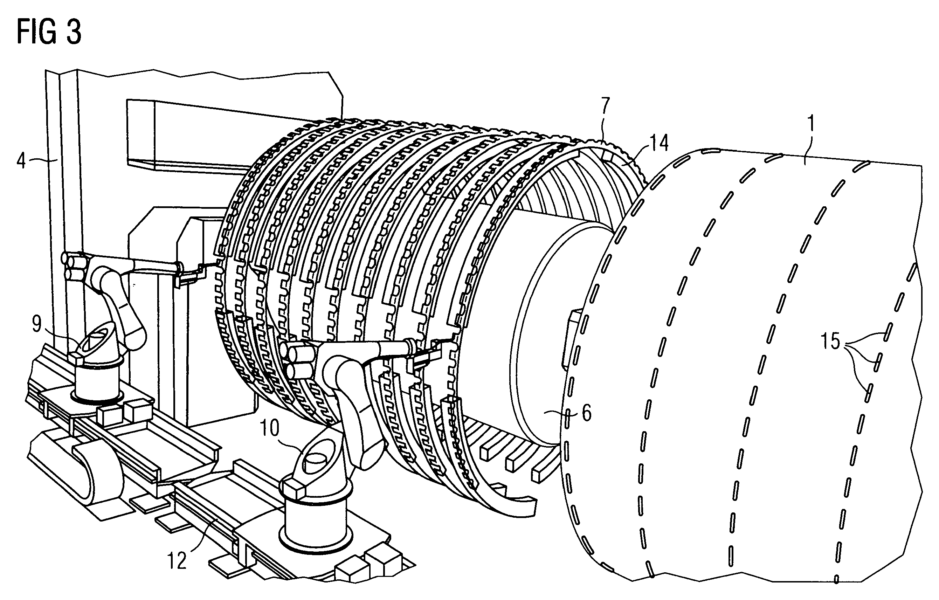

Fig. 3 zeigt den Vorgang der vorbereitenden Oberflächenbehandlung der Spanten 7 mittels der modularen Werkzeuge 9 und 10. Die Spanten 7 sind dabei auf schematisch dargestellten Aufnehmern 14 angeordnet. Nach der vorbereitenden Oberflächenbehandlung wird das Integrationswerkzeug 6 mit den eingerüsteten Spanten in die Rumpfstruktur 1 eingebracht und die Spanten 7 werden mittels der Aufnehmer14 des Integrationswerkzeugs 6 automatisch in die Fügeposition gebracht. Anschließend wird der Klebstoff durch in der Rumpfstruktur angeordnete Applikationsöffnungen 15 in die jeweiligen Fügespalte eingebracht.

### BEZUGSZEICHENLISTE

- 1: Rumpfsegment
- 2: Bauteileträger
- 3: Zentralträger
- 4: vorderer Auflager
- 5: hinterer Auflager
- 6: Integrationswerkzeug
- 7: Spanten
- 8: Spantgurtoberfläche
- 9: modulares Werkzeug
- 10: modulares Werkzeug
- 11: modulares Werkzeug
- 12: Schienensystem
- 13: modulares Werkzeug
- 14: Aufnehmer
- 15: Applikationsöffnung

## Patentansprüche

1. Verfahren zur Klebstoffapplikation im Fahrzeugbau beim Fügen von toleranzbehafteten Fügepartnern (1, 7), **mit den** Schritten:
Automatisiertes Ermitteln der Geometriedaten der Fügepartner (1, 7),
Ermitteln der Fügespaltmaße der Fügepartner (1, 7) aus den ermittelten Geometriedaten,
Bestimmen der Menge des zu applizierenden Klebstoffs anhand der Fügespaltmaße,
Fügen der Fügepartner (1, 7) in ihre Fügeposition, und Applizieren des Klebstoffs in den Fügespalt während dem Fügen der Fügepartner (1, 7), wobei die Applikation des Klebstoffs in einer vorläufigen Spaltposition beginnt und während der Klebstoffapplikation die Fügepartner (1, 7) in die endgültige Fügeposition gebracht werden.

2. Verfahren nach einem der vorangegangenen Ansprüche, **dadurch gekennzeichnet, dass** der Klebstoff seitlich in den Klebespalt und/oder durch Applikationsöffnungen (15) in den Fügepartnern (1, 7) in den Fügespalt appliziert wird.

3. Verfahren nach einem der vorangegangenen Ansprüche, **dadurch gekennzeichnet, dass** der Fügespalt seitliche oder flächenrandständige Begrenzungselemente aufweist, um ein Austreten des in den Fügespalt applizierten Klebstoffs zu verhindern.

4. Verfahren nach einem der vorangegangenen Ansprüche, **dadurch gekennzeichnet, dass** vor dem Zusammenfügen der Fügepartner (1, 7) die Fügeflächen der Fügespalten einer automatisierten Vorbehandlung zur Optimierung der klebtechnischen Qualität unterzogen und deren klebtechnische Qualität bestimmt werden.

5. Verfahren nach einem der vorangegangenen Ansprüche, **dadurch gekennzeichnet, dass** die Fügepartner (1, 7) durch Rumpfsegmente (1) und strukturell relevante Komponenten (7) zum Erstellen einer Rumpfstruktur gebildet werden.

6. Vorrichtung zur Durchführung des Verfahrens nach einem der vorangegangenen Ansprüche aufweisend:
einen Bauteilträger (2) mit Bauteilaufnahme zur Aufnahme eines ersten Fügepartners (1),
einen Zentralträger (3) zur Aufnahme eines Integrationswerkzeug (6),
ein Integrationswerkzeug (6) zur Aufnahme und zum Einbringen der in den ersten Fügepartner (1) einzubringenden weiteren Fügepartner (7)
ein Meßsystem zum Ermitteln der Geometriedaten der Fügepartner (1, 7) und zum Berechnen der Fügespalte,
mindestens ein modulares Werkzeug (9, 10) zum Applizieren des Klebstoffs, und
ein Steuersystem zum Steuern der Vorrichtung.

7. Vorrichtung nach Anspruch 6, **dadurch gekennzeichnet, dass** die Vorrichtung weitere modulare Werkzeuge (13) zur Oberflächenbehandlung und/oder Oberflächenmonitoring und/oder Klebstoffaushärten aufweist.

## Claims

1. Method for glue application in vehicle construction when joining joining partners (1, 7) which are subject to tolerances, comprising the steps of:
determining the geometric data of the joining partners (1, 7) in an automated manner,
determining the joining gap dimensions of the joining partners (1, 7) from the determined geometric data,
determining the amount of glue to be applied by way of the joining gap dimensions,
joining the joining partners (1, 7) into the joining position thereof, and applying the glue into the joining gap during the joining of the joining partners (1, 7), the application of the glue starting in a preliminary gap position and the joining partners (1, 7) being brought into the definitive joining position during the glue application.

2. Method according to any of the preceding claims, **characterised in that** the glue is applied laterally into the gluing gap and/or through application openings (15) in the joining partners (1, 7) into the joining gap.

3. Method according to any of the preceding claims, **characterised in that** the joining gap comprises lateral or peripheral limiting elements to prevent the glue applied into the joining gap from escaping.

4. Method according to any of the preceding claims, **characterised in that**, before the joining partners (1, 7) are joined together, the joining faces of the joining gaps are subjected to an automated pre-treatment for optimising the adhesive quality and the adhesive quality thereof is determined.

5. Method according to any of the preceding claims, **characterised in that** the joining partners (1, 7) are formed by fuselage segments (1) and structurally relevant components (7) for producing a fuselage structure.

6. Device for carrying out the method according to any of the preceding claims, comprising:
a component support (2) comprising a component receiver for receiving a first joining partner (1),
a central support (3) for receiving an integration tool (6),
an integration tool (6) for receiving and introducing the further joining partners (7) which are to be introduced into the first joining partner (1),
a measuring system for determining the geometric data of the joining partners (1, 7) and for calculating the joining gaps,
at least one modular tool (9, 10) for applying the glue, and
a control system for controlling the device.

7. Device according to claim 6, **characterised in that** the device comprises further modular tools (13) for surface treatment and/or surface monitoring and/or glue curing.

## Revendications

1. Procédé d'application de colle dans la construction de véhicules lors de l'assemblage de pièces à assembler (1, 7) présentant des tolérances, comprenant les étapes consistant à :
déterminer de manière automatisée les données géométriques des pièces à assembler (1, 7),
déterminer les dimensions de l'interstice d'assemblage des pièces à assembler (1, 7) à partir des données géométriques déterminées,
déterminer la quantité de la colle à appliquer à partir des dimensions de l'interstice d'assemblage,
assembler les pièces à assembler (1, 7) dans leur position d'assemblage, et
appliquer la colle dans l'interstice d'assemblage pendant l'assemblage des pièces à assembler (1, 7), l'application de la colle commençant dans une position d'interstice provisoire et les pièces à assembler (1, 7) étant amenées en position d'assemblage finale pendant l'application de colle.

2. Procédé selon une des revendications précédentes, **caractérisé en ce que** la colle est appliquée latéralement dans l'interstice de collage et/ou par des ouvertures d'application (15) dans les pièces à assembler (1, 7) dans l'interstice d'assemblage.

3. Procédé selon une des revendications précédentes, **caractérisé en ce que** l'interstice d'assemblage présente des éléments de limitation latéraux ou prévu au bord de la surface de bord pour éviter toute sortie de la colle appliquée dans l'interstice d'assemblage.

4. Procédé selon une des revendications précédentes, **caractérisé en ce que**, avant l'assemblage des éléments à assembler (1, 7), les surfaces d'assemblage des interstices d'assemblage sont soumises à un traitement préalable automatisé pour optimiser la qualité de technique d'adhérence et leur qualité de technique d'adhérence est déterminée.

5. Procédé selon une des revendications précédentes, **caractérisé en ce que** les éléments à assembler (1, 7) sont formés par des segments de fuselage (1) et des composants (7) structurellement pertinents pour créer une structure de fuselage.

6. Dispositif destiné à la réalisation du procédé selon l'une des revendications précédentes présentant :
un support de composant (2) comportant un logement de composant pour recevoir un premier élément à assembler (1),
un support central (3) pour recevoir un outil d'intégration (6),
un outil d'intégration (6) pour recevoir et introduire les autres éléments à assembler (7) à introduire dans le premier élément à assembler (1),
un système de mesure pour déterminer les données géométriques des éléments à assembler (1, 7) et pour calculer l'interstice d'assemblage,
au moins un outil modulaire (9, 10) pour appliquer la colle, et
un système de commande pour commander le dispositif.

7. Dispositif selon la revendication 6, **caractérisé en ce que** le dispositif présente d'autres outils modulaires (13) pour le traitement des surfaces et/ou la surveillance des surfaces et/ou le durcissement de la colle.
